# EUROPEAN PATENT SPECIFICATION

(11) **EP 3 065 146 B1**
(45) Date of publication and mention of the grant of the patent: **30.12.2020**
(21) Application number: 16158347.1
(22) Date of filing: 02.03.2016
(51) Int. Cl.: H01B 13/012

(54) **METHOD AND EQUIPMENT FOR MANUFACTURING WIRE HARNESS**
VERFAHREN UND AUSRÜSTUNG ZUR HERSTELLUNG EINES KABELBAUMES
PROCÉDÉ ET ÉQUIPEMENT DE FABRICATION D'UN FAISCEAU DE CÂBLES

(30) Priority: 03.03.2015 JP 2015041862
(43) Date of publication of application: 07.09.2016
(73) Proprietor: Hitachi Metals, Ltd., Tokyo 108-8224 (JP)
(72) Inventor: KAWASE, Kenji, Tokyo, 108-8224 (JP); NAGANO, Kazushige, Ibaraki (JP); KIMOTO, Daisuke, Ibaraki (JP); KUROKAWA, Yasuko, Ibaraki (JP); WATANABE, Sayuki, Ibaraki (JP); NAKATANI, Wataru, Tokyo, 108-8224 (JP); KODATO, Yoichi, Ibaraki (JP)
(74) Representative: Betten & Resch

(56) References cited:
- WO-A2-2009/120295
- FR-A1- 3 005 375
- US-A1- 2002 019 672
- US-A1- 2007 277 372

## Description

### BACKGROUND OF THE INVENTION

### 1. FIELD OF THE INVENTION

The invention relates to an equipment for manufacturing a wire harness.

### 2. DESCRIPTION OF THE RELATED ART

In general, a wire laying board is used for assembling a wire harness. The wire laying board is formed by sticking a full-size drawing of a wire harness onto an assembly drawing board and a wire laying jig is attached to the wire laying board. On the full-size drawing, operating instructions such as assembly procedure and accessory component attachment instructions are also given. A worker lays an electric wire in accordance with the operating instructions and attaches accessory components to predetermined positions on the laid wire or a bundle of wires, thereby assembling a wire harness.

In case that the design is changed, however, the full-size drawing needs to be replaced according to the change. Therefore, a drawing board device for assembling wire harness which does not require such work has been proposed (see e.g., JP-A-2000-195352).

This drawing board device for assembling wire harness is provided with a wire laying board to which various jigs required to assemble a wire harness can be attached, an assembly jig attached to the wire laying board to hold an electric wire to be laid, and a display means for displaying images of wire harness assembling process on the wire laying board so that the images can be seen on the front surface of the wire laying board.

The images of the wire harness assembling process are switched according to three steps: a wire laying step, an accessory component attaching step and a tape winding step.

FR 3 005 375A discloses that colors of the wires to be laid in the next laying step are changed in a total diagram showing wiring locations.

### SUMMARY OF THE INVENTION

The conventional drawing board device for assembling wire harness, however, is not configured that the image of the wire harness assembling process is changed to follow the work progress during the wire laying step. Therefore, when handling electric wires having similar lengths, a wrong wire may be laid or a wire may be laid on a wrong position. In addition, since the attachment position of the assembly jig is not included in the image of the assembling process, the assembly jig may be attached to a wrong position. Furthermore, in case that the assembly jig is configured to be attached to the wire laying board by being inserted through a hole formed on the wire laying board, there is a risk of damaging or breaking the wire laying board or the assembly jig and the attachment work is thus not easy. In addition, although it is possible to manufacture and ship plural wire harnesses within a short lead time by using plural drawing board devices for assembling wire harness, the production rate may be different depending on workers' ability and productivity may decrease.

It is an object of the invention to provide an equipment for manufacturing a wire harness which allows productivity to be improved.

The above object is achieved with the features of the claims.

### BRIEF DESCRIPTION OF THE DRAWINGS

Next, the present invention will be explained in more detail in conjunction with appended drawings, wherein:
**FIG.1** is a schematic cross sectional view showing an example configuration of a wire harness manufacturing equipment in a first embodiment of the present invention;
**FIG.2** is a block diagram illustrating an example of a control system of a management unit;
**FIG3** is a block diagram illustrating an example of a control system of a projector;
**FIG4** is a block diagram illustrating an example configuration of a remote controller;
**FIG5A** is a front view showing an assembly jig before being attached to a screen;
**FIG.5B** is a plan view showing the assembly jig;
**FIG5C** is a partial cross sectional view showing the assembly jig after being attached to the screen;
**FIG.6A** is a diagram illustrating an example projection image on the first page;
**FIG.6B** is a diagram illustrating an example projection image on the second page;
**FIG.6C** is a diagram illustrating an example projection image on the third page;
**FIG.6D** is a diagram illustrating an example projection image on the fourth page;
**FIG.6E** is a diagram illustrating an example projection image on the fifth page;
**FIG.7A** is a plan view showing a main portion of the screen in Modification 1;
**FIG.7B** is a cross sectional view showing a main portion of the screen in Modification **2;**
**FIG.8** is a schematic cross sectional view showing an example configuration of a wire harness manufacturing equipment in a second embodiment of the invention;
**FIG.9** is a block diagram illustrating an example of a control system of the management unit in the second embodiment; and
**FIG.10** is a schematic cross sectional view showing an example configuration of a wire harness manufacturing equipment in a third embodiment of the invention.

### DETAILED DESCRIPTION OF THE PREFERRED EMBODIMENTS

Embodiments of the invention will be described below in reference to the drawings. Note that, constituent elements having substantially the same functions are denoted by the same reference numerals in each drawing and the overlapping explanation thereof will be omitted.

### First embodiment

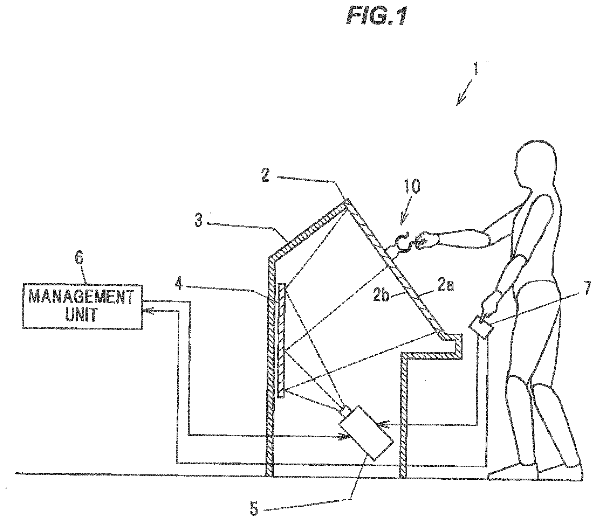

**FIG1** is a schematic cross sectional view showing an example configuration of a wire harness manufacturing equipment in the first embodiment of the invention.

### General configuration

A wire harness manufacturing equipment **1** is provided with a screen **2,** a housing **3** supporting the screen **2,** a mirror **4** arranged inside the housing **3,** a projector **5** also arranged inside the housing **3** to project a projection image on a back surface **2b** of the screen **2** via the mirror **4,** a management unit **6** controlling the assembling of wire harness, and a remote controller **7** for remotely operating the projector **5.**

The screen **2** and a projecting means **50** (described later) of the projector 5 here are an example of a display portion. Meanwhile, "wire harness" is an assembly having plural bundled electric wires and connectors or terminals provided at both ends of each electric wire for connection to a printed wiring board or a device. "Wire harness assembling process" consists of, e.g., an assembly jig attaching step, a harness laying step including steps of laying electric wires and a step of attaching connectors to both ends of electric wires, and a step of bundling the laid wires. However, the process is not limited thereto. Then, "wire harness assembly" is a device assembled through the wire harness assembling process.

The screen 2 is formed of a transparent plate such as an acrylic board or glass plate. A front surface 2a of the screen 2 is a smooth surface to allow an assembly jig 10 to adhere thereto using negative pressure, while the back surface 2b is a light-scattering surface to allow a projected image to be seen on the front surface 2a. The screen **2** is not specifically limited as long as it is a rear projection screen. For example, a transparent plate with a light-scattering sheet attached to a back surface thereof may be used.

The projector **5** receives projection image data from a communication unit 64 of the management unit **6,** stores the projection image data in a memory **58,** and starts, forwards, reverses or ends projection of images based on a start signal, a page forward signal, a page reverse signal and an end signal, etc., from the remote controller **7**

The management unit **6** is realized by, e.g., a personal computer (PC). The detailed configuration of the management unit **6** will be described later.

The remote controller **7** has a function of transmitting a control signal to control the projector **5,** a barcode reading function, a function of determining matching of two read barcodes and a function of displaying the determination result. The detailed configuration of the remote controller **7** will be described later.

### Configuration of the management unit

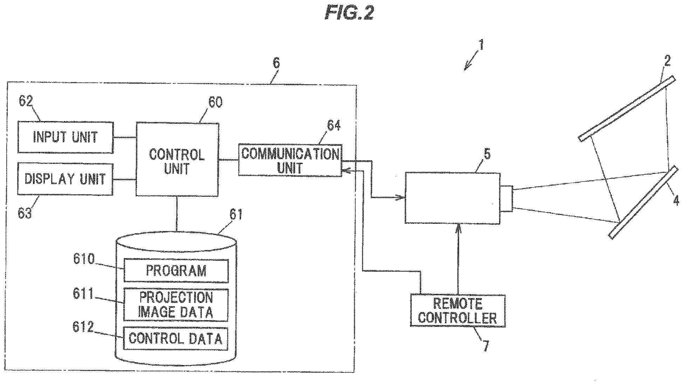

**FIG.2** is a block diagram illustrating an example of a control system of the management unit **6.** The management unit **6** is provided with a control unit **60** constituted by using a CPU (Central Processing Unit), etc., to control each unit of the wire harness manufacturing equipment **1,** a memory unit **61** for storing various information, an input unit **62** realized by a computer keyboard or a computer mouse, etc., a display unit **63** realized by a liquid-crystal display, etc., and the communication unit **64** communicating with external devices such as the projector **5** and the remote controller 7.

The memory unit **61** is constructed by using ROM (Read Only Memory), RAM (Random Access Memory) or a hard disc, etc., and stores a program **610** for CPU, a projection image data **611** and a control data **612,** etc.

The CPU of the control unit **60** operates according to the program **610** and controls each unit of the management unit **6** as well as the entire wire harness manufacturing equipment **1.**

The projection image data **611** is composed of plural pages which correspond to wire harness assembly IDs (identification information) used for identifying wire harness assemblies and also correspond to the assembling process as well as to the detailed working steps of the assembling process. The projection image data **611** also includes a jig image indicating a position of the assembly jig **10** which is capable of adhering to the front surface **2a** of the screen **2** by using negative pressure. Also, the projection image data **611** is pre-adjusted so that a wire harness displayed on the screen **2** is displayed in a full size at the same magnification within a square or rectangle without distortion. The projection image data **611** includes, e.g., image information for displaying step names and contents in images and text information for displaying work details of the step in letters.

For example, worker IDs (identification information) for identifying workers, wire harness assembly IDs, start date and time of work (e.g., date and time at which a start signal is sent from the remote controller 7), end date and time of the work (e.g., date and time at which an end signal is sent from the remote controller 7) and a result of determination on a barcode of a connector, etc., are associated with each other in the control data **612** which is stored as history information in the memory unit **61.**

### Configuration of the projector

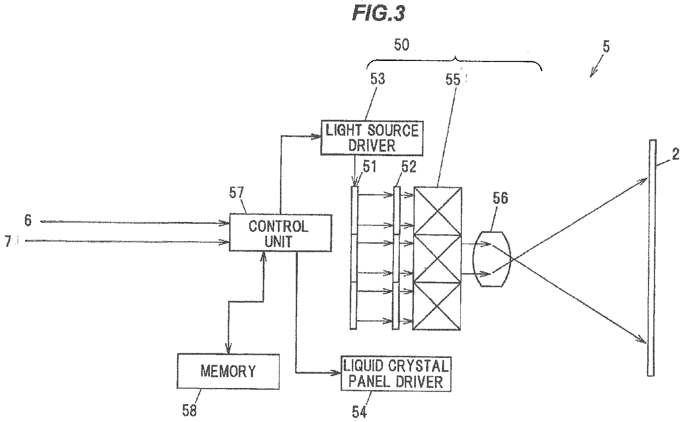

**FIG.3** is a block diagram illustrating an example of a control system of the projector **5.** The projector **5** is provided with the projecting means **50** for projecting a projection image, a control unit **57** constituted by using a CPU, etc., to control each unit of the projector **5,** and the memory **58** for storing the projection image data **611** transmitted from the management unit **6.**

The projecting means **50** is provided with three LED light sources **51** respectively emitting red light, green light and blue light, three crystal liquid panels **52** of R, G and B respectively producing red image light, green image light and blue image light upon receiving the red, green and blue light emitted from the LED light sources **51,** a light source driver **53** for driving the LED light sources **51,** a liquid crystal panel driver **54** for driving the crystal liquid panels **52,** a synthesis optical system **55** for synthesizing the red, green and blue image light produced by the three crystal liquid panels **52,** and a projector lens **56** for projecting the projection image synthesized by the synthesis optical system **55** on the screen **2** via the mirror **4.**

The control unit **57** of the projector **5,** once received projection image data transmitted from the management unit **6,** stores the projection image data in the memory **58.** The control unit **57** also retrieves the projection image data of the first page from the memory **58** based on a start signal transmitted from the remote controller **7** and then controls so that a projection image based on the projection image data is projected on the screen **2.** Also, based on a page forward signal or a page reverse signal from the remote controller **7,** the control unit **57** controls so that a projection image based on the projection image data of the corresponding page is projected on the screen **2.**

### Configuration of the remote controller

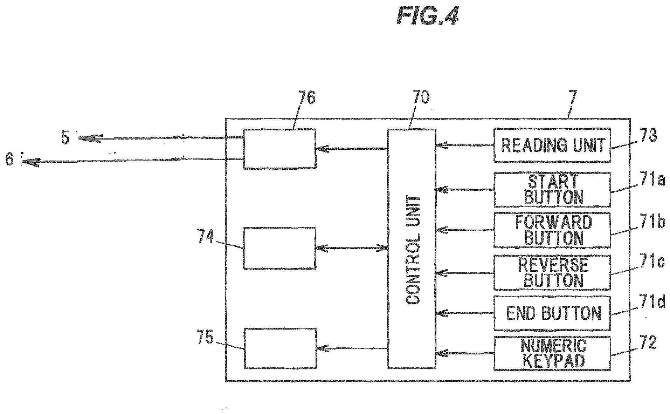

**FIG.4** is a block diagram illustrating an example configuration of the remote controller **7.** The remote controller **7** is provided with a control unit **70** constituted by using a CPU, etc., to control each unit of the remote controller **7,** various buttons such as a start button **71a** generating a start signal to instruct start of projection, a forward button **71b** generating a page forward signal to instruct page forward, a reverse button **71c** generating a page reverse signal to instruct page reverse and an end button **71d** generating an end signal to instruct end of projection, a numeric keypad **72,** a reading unit **73** optically reading a barcode, a determination unit **74** for determining whether or not a barcode attached to the connector matches the barcode displayed on the projection image, a determination result display unit **75** for displaying the determination result from the determination unit **74,** and a communication unit **76** controlled by the control unit 70 to send the determination result to the management unit **6.**

The determination result display unit **75** may be configured such that a correct answer sound (e.g., ding-dong) indicating the code match is produced when the two barcodes match, and a buzzer-like sound indicating the code mismatch is produced when the two barcodes do not match. Alternatively, the determination result display unit **75** may be configured such that, e.g., a green lamp is lit when the two barcodes match and, e.g., a red lamp is lit when the two barcodes do not match. Furthermore, the determination result may be indicated by both the sound and color.

### Configuration of the assembly jig

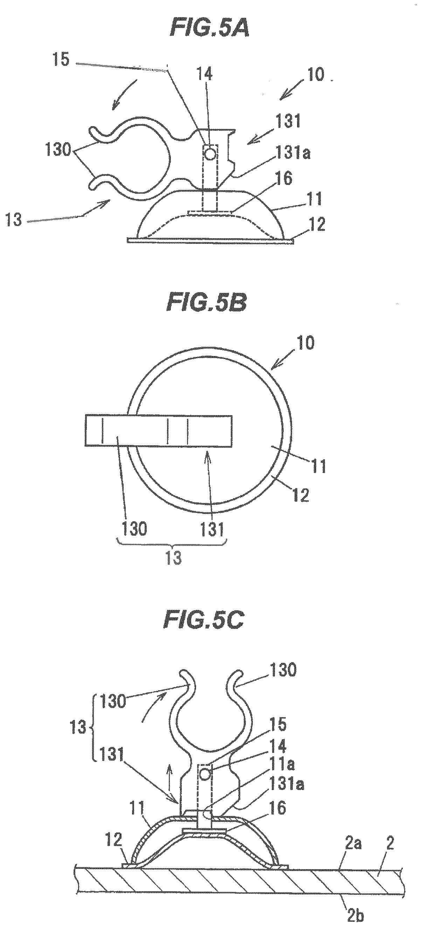

**FIGS.5A** to **5C** show the assembly jig **10,** wherein **FIG5A** is a front view before being attached to the screen **2,** **FIG.5B** is a plan view of **FIG.5A** and FIG5C is a partial cross sectional view after being attached to the screen **2.**

The assembly jig **10** is provided with a dome-shaped main body **11,** a suction disc **12** arranged on the inner side of the main body **11,** a lever **13,** a slide shaft **15** rotatably supporting the lever **13** about a support shaft **14,** and a seat **16** provided at a tip of the slide shaft **15** to fix the slide shaft **15** to the suction disc **12.**

The main body **11** has an opening **11a** in the center to allow the slide shaft 15 to penetrate and slide in a vertical direction.

The lever **13** is provided with a pair of support pieces **130** for supporting an electric wire or a wire harness, and a fulcrum portion **131** connected to the pair of support pieces **130** so as to be a rotation center of the lever **13.** A cam surface **131a** is formed on the fulcrum portion **131.** The cam surface **131a** is not in contact with the upper surface of the main body **11** in the state shown in **FIG.5A****,** and comes into contact with the upper surface of the main body **11** when rotating the lever **13** as shown in **FIG.5C****,** and the slide shaft **15** is thereby pulled upward. When the slide shaft **15** is pulled up, the center portion of the suction disc **12** is lifted up, a space on the inner side of the suction disc **12** increases and pressure therein becomes negative, and the assembly jig **10** thereby adheres to the front surface **2a** of the screen **2.**

The main body **11,** the lever **13,** the support shaft **14,** the slide shaft **15** and the seat 16 are formed of, e.g., a resin or a metal. The suction disc **12** is formed of, e.g., an elastic member such as rubber.

### Assembling method

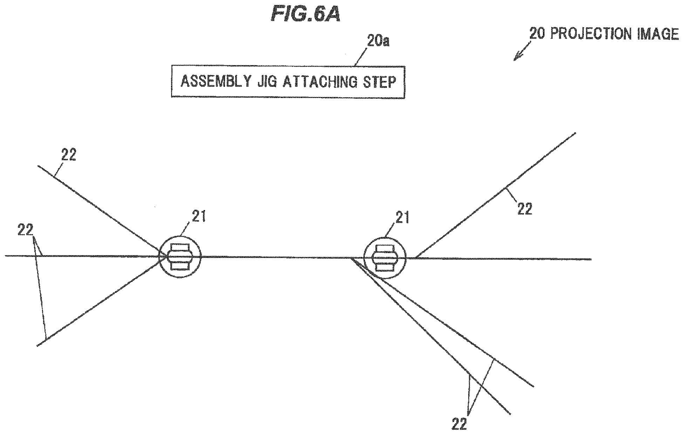

Next, an example of the method of assembling the wire harness assembly will be described in reference to **FIGS.6A** to **6E. FIGS.6A** to **6E** are diagrams illustrating example projection images as viewed from the front side of the screen **2.** The wire laying step consisting of three wire harness laying steps will be described below.

A supervisor operates the input unit **62** of the management unit 6 to input wire harness identification information. The control unit **60** retrieves, from the memory unit **61,** projection image data corresponding to the wire harness identification information input to the input unit **62** and then sends the retrieved data to the projector **5.**

The control unit **57** of the projector **5** stores the projection image data transmitted from the management unit **6** in the memory **58.** A worker operates the numeric keypad **72** of the remote controller **7** to input the worker ID. Then, the worker operates the start button **71a** of the remote controller **7** to instruct start of projection. The control unit **70** of the remote controller **7** sends the worker ID to the management unit **6** as well as the start signal to the projector **5.** The control unit 60 of the management unit **6** controls so that the worker ID sent from the remote controller **7** is stored as the control data **612** in the memory unit **61.** The control unit **57** of the projector **5** starts projection based on the start signal from the remote controller **7.** That is, the control unit **57** retrieves the projection image data of the first page from the memory **58** and controls the projecting means **50** so that the projection image based on the projection image data of the first page is projected on the screen **2.**

### (1) Assembly jig attaching step

**FIG.6A** is a diagram illustrating an example projection image on the first page which shows the "assembly jig attaching" step. A projection image **20** in **FIG.6A** shows a step name **20a** which is the "assembly jig attaching step", jig images **21** each depicting the assembly jig **10** to indicate the position for attaching the assembly jig **10,** and wire guiding lines **22** indicating the positions for laying electric wires. At this time, the jig images **21** may be highlighted.

The worker checks that the step name **20a** on the projection image **20** is the "assembly jig attaching step". The worker then attaches the assembly jigs **10** to positions which are indicated by the jig images **21** projected on the screen **2.** Once the assembly jigs **10** are attached, the worker operates the forward button **71b** of the remote controller **7.** The control unit **70** of the remote controller **7** then sends a page forward signal to the projector **5** based on the operation performed on the forward button **71b.**

### (2) Step of laying harness I

The control unit **57** of the projector **5** retrieves the projection image data of the second page from the memory **58** based on the page forward signal from the remote controller 7 and controls the projecting means **50** so that a projection image based on the projection image data of the second page is projected on the screen **2.**

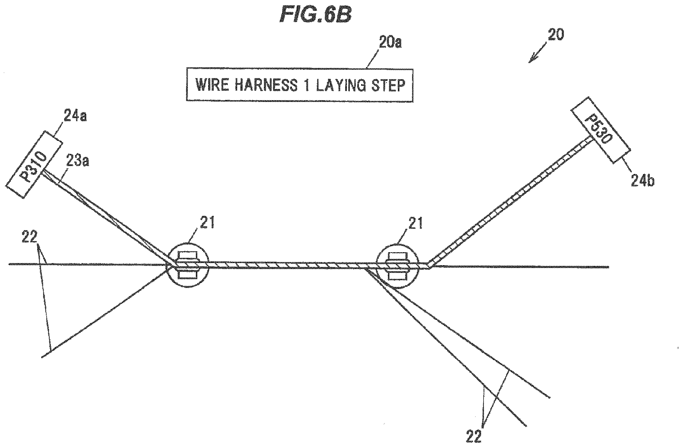

**FIG.6B** is a diagram illustrating a projection image on the second page which shows the "harness I laying" step. The projection image **20** in **FIG.6B** shows the step name **20a** which now is the "harness I laying step", the jig images **21** and the wire guiding lines **22** in the same manner as in **FIG.6A****,** and also shows a wire image **23a** and connector images **24a** and **24b** including model numbers and barcodes (not shown). On this projection image, the wire image **23a** and the connector images **24a** and **24b** may be highlighted. In the projection image of this wire laying step, the specification **9** (type, color and length, etc.) of electric wire is also displayed (the same applied to the wire laying steps described below).

The worker checks that the step name **20a** on the projection image **20** is the "wire harness I laying step". The worker then selects an electric wire of a similar color to and of substantially the same length as the wire image **23a** and places the selected electric wire on the wire image **23a** which passes between the pairs of support pieces **130** of the assembly jigs **10.**

Next, connectors corresponding to the connector images **24a** and **24b** are connected to both ends of the electric wire. At this time, the worker connects the connectors after making sure that the connector numbers attached to the connectors are respectively the same as the connector numbers shown in the connector images **24a** and **24b.** In detail, the reading unit **73** of the remote controller **7** reads the barcodes written together with the connector numbers on the connectors as well as those in the connector images **24a** and **24b.** The determination unit **74** determines whether or not the barcodes match, and the determination result display unit **75** displays the determination result to let the worker know. In the meantime, the control unit **70** of the remote controller **7** sends the determination result to the management unit **6** via the communication unit **76.** The control unit **60** of the management unit **6** receives the determination result via the communication unit **64** and stores the determination result, together with the step name, as history information in the control data **612.** Reading of barcode, displaying of determination result and storing of history information are performed in the same manner in the following harness laying steps.

The harness I laying step is completed as described above. Once the harness I laying step is completed, the worker operates the forward button **71b** of the remote controller **7.** The control unit **70** of the remote controller **7** sends a page forward signal to the projector 5 based on the operation performed on the forward button **71b.**

### (3) Step of laying harness II

The control unit **57** of the projector **5** retrieves the projection image data of the third page from the memory **58** based on the page forward signal from the remote controller 7 and controls the projecting means **50** so that a projection image based on the projection image data of the third page is projected on the screen **2.**

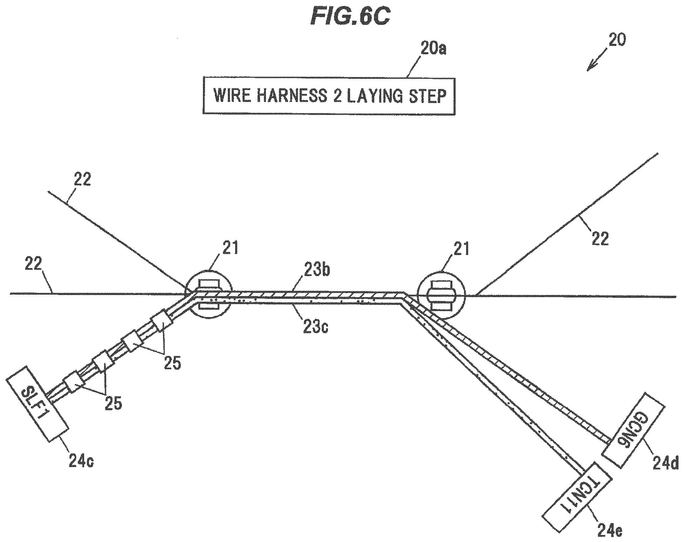

**FIG.6C** is a diagram illustrating a projection image on the third page which shows the "harness II laying" step. The projection image **20** in **FIG.6C** shows the step name **20a** which is the "harness II laying step", the jig images **21** and the wire guiding lines **22** in the same manner as in **FIG.6A****,** and also shows wire images **23b** and **23c** and connector images **24c, 24d** and **24e** including model numbers and barcodes (not shown), and further shows a tape image **25** depicting a tape. On this projection image, the wire image **23b, 23c,** the connector images **24c** to **24d** and the tape image **25** may be highlighted, or only the tape image **25** may be highlighted. Note that, the image of the harness I is not displayed.

The worker checks that the step name **20a** on the projection image **20** is the "harness II laying step". The worker then selects two electric wires of similar colors to and of substantially the same lengths as the two wire images **23b** and **23c** and places the two selected electric wires on the wire images **23b** and **23c** which pass between the pair of support pieces **130** of the assembly jig **10.**

Next, connectors corresponding to the connector images **24c, 24d** and **24e** are connected to both ends of the two electric wires. At this time, the worker connects the connectors after making sure that the connector numbers attached to the connectors are respectively the same as the connector numbers shown in the connector images **24c, 24d** and **24e.** Next, the tape is wound at plural positions on which the tape image **25** is displayed, thereby bundling the electric wires. The tape winding process may be carried out in a later process, e.g., in a wire bundling step.

The harness II laying step is completed as described above. Once the harness II laying step is completed, the worker operates the forward button **71b** of the remote controller **7.** The control unit **70** of the remote controller **7** sends a page forward signal to the projector **5** based on the operation performed on the forward button **71b.**

### (4) Step of laying harness III

The control unit 57 of the projector 5 retrieves the projection image data of the fourth page from the memory **58** based on the page forward signal from the remote controller **7** and controls the projecting means **50** so that a projection image based on the projection image data of the fourth page is projected on the screen **2.**

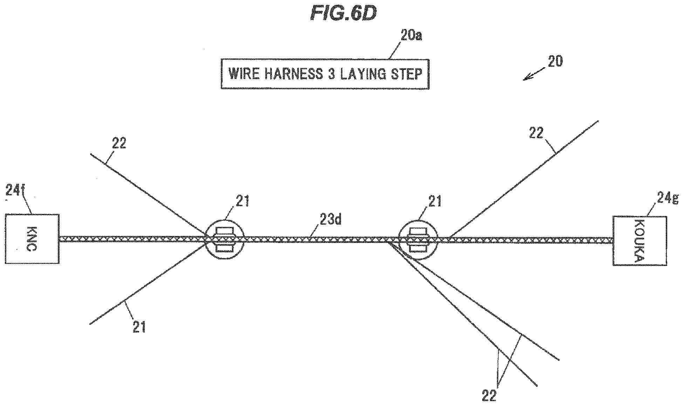

**FIG.6D** is a diagram illustrating a projection image on the fourth page which shows the "harness III laying" step. The projection image **20** in **FIG6C** shows the step name **20a** which is the "harness III laying step", the jig images **21** and the wire guiding lines **22** in the same manner as in **FIG.6A****,** and also shows a wire image **23d** and connector images **24f** and **24g** including model numbers and barcodes (not shown). On this projection image, the wire image **23d** and the connector images **24f** and **24g** may be highlighted. Note that, the images of the harnesses **1** and **2** are not displayed.

According to the "harness III laying step" as the step name **20a** on the projection image **20,** the worker selects an electric wire of a similar color to and of substantially the same length as the wire image **23d** and places the selected electric wire on the wire image **23d** which passes between the pairs of support pieces **130** of the assembly jigs **10.**

Next, connectors corresponding to the connector images **24f** and **24g** are connected to both ends of the electric wire. At this time, the worker connects the connectors after making sure that the connector numbers attached to the connectors are respectively the same as the connector numbers shown in the connector images **24f** and **24g.**

The harness III laying step is completed as described above. Once the harness III laying step is completed, the worker operates the forward button **71b** of the remote controller **7.** The control unit **70** of the remote controller **7** sends a page forward signal to the projector 5 based on the operation performed on the forward button 71b.

### (5) Step of bundling electric wires

The control unit **57** of the projector **5** retrieves the projection image data of the fifth page from the memory **58** based on the page forward signal from the remote controller 7 and controls the projecting means **50** so that a projection image based on the projection image data of the fifth page is projected on the screen **2.**

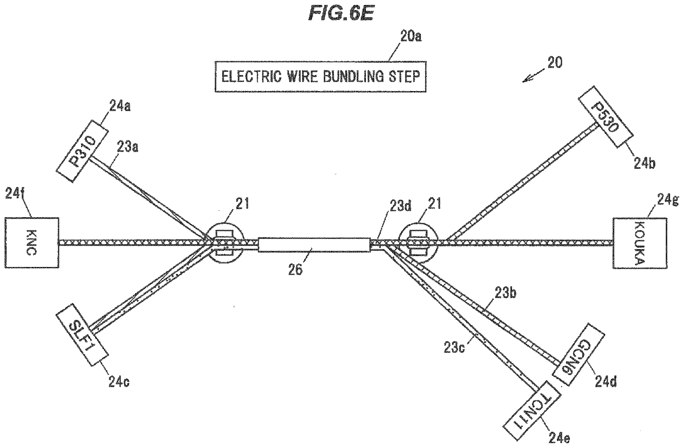

**FIG.6E** is a diagram illustrating a projection image on the fifth page which shows the "wire bundling" step. The projection image **20** in **FIG.6E** shows the step name **20a** which is the "wire bundling step" and the jig images **21** in the same manner as in **FIG.6A****,** and also shows all the wire images **23a** to **23d** of the harnesses **1** to **3** and the connector images **24a** to **24g,** and further shows a tube image **26** depicting a slit tube. On this projection image, the tube image **26** may be highlighted so as to stand out.

The worker checks that the step name **20a** on the projection image **20** is the "wire bundling step" and bundles the electric wires using the slit tube at the position on which the tube image **26** is projected.

The wire harness assembly is completed through the steps described above.

Once the wire harness assembly is completed, the worker operates the end button **71d.** The remote controller **7** sends an end signal to the projector **5** based on the operation performed on the end button **71d.**

Based on the end signal from the remote controller **7,** the control unit **57** of the projector **5** deletes the projection image data stored in the memory **58.**

### Functions and effects of the first embodiment

The following functions and effects are obtained in the first embodiment.
(a) Since the image of the wire harness assembling process is changed to follow the work progress in the wire laying step, it is less likely to pick up a wrong electric wire or to lay a wire on a wrong position.
(b) Since the position for attaching the assembly jig is displayed on the projection image, the assembly jig is less likely to be attached to a wrong position.
(c) Since the assembly jig is attached to the screen by suction, there is less risk of damaging the screen or breaking the assembly jig. Thus, attachment process is easy.
(d) Therefore, it is possible to reduce erroneous operations such as erroneous attachment of the assembly jig which supports the electric wires or wire harness.
(e) The screen **2** is to project an image. Thus, a relatively strong screen can be used as the screen **2.**

Next, modifications of the first embodiment will be described.

### Modification 1

Although the assembly jig adhered to the surface of the screen by negative pressure has been described in the first embodiment, a screen magnetically attracting the assembly jig to the surface thereof by a magnetic force may be used.

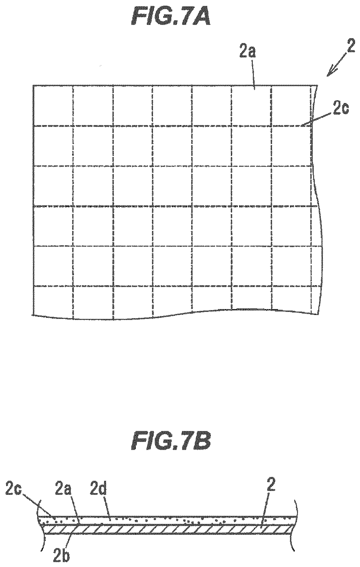

**FIG7A** is a plan view showing a main portion of the screen in Modification **1.** The screen **2** with magnetic attraction properties may be a screen having metal wires **2c** arranged in a lattice pattern, as shown in **FIG.7A****.** In this case, the assembly jig to be used may be provided with, e.g., a permanent magnet provided rotatably and a knob for rotating the permanent magnet to turn on or off the magnetic force. To adhere the assembly jig to the front surface **2a** of the screen **2,** the knob is rotated to turn on the magnetic force. To remove the assembly jig from the screen **2,** the knob is rotated to turn off the magnetic force. Alternatively, an electromagnet may be used instead of the permanent magnet. Modification **1** may be applied to other embodiments.

### Modification 2

**FIG.7B** is a cross sectional view showing a main portion of the screen in Modification **2.** The screen **2** in which a transparent sheet **2d** containing magnetic powder **2c** is formed on the front surface **2a** as shown in **FIG.7B** may be used. In this case, the assembly jig to be used is the same as that in Modification **1.** Modification **2** may be applied to other embodiments.

### Modification 3

Although the projection image data is prepared for each assembling process in the first embodiment, the projection image data **611** may be configured such that different objects (including text) are projected for every assembling process. Alternatively, the image may be changed every page when displaying the steps in the general category and every object when displaying the steps in a subcategory. Modification **3** may be applied to other embodiments.

### Modification 4

Although the projection image is changed based on the page forward signal from the remote controller **7** in the first embodiment, the projector **5** may be controlled so that the projection image to be displayed is changed at predetermined time intervals. Modification **4** may be applied to other embodiments.

### Second embodiment

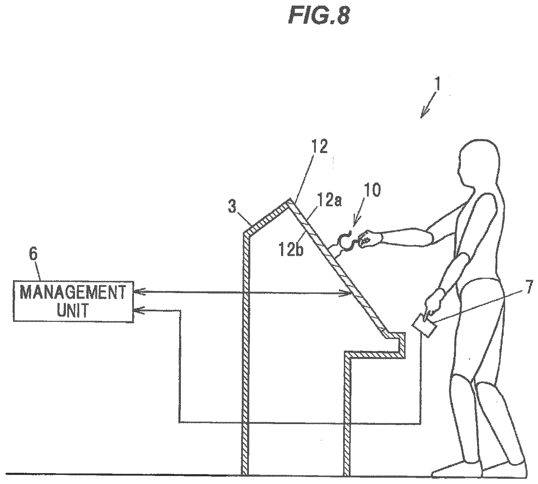

**FIG.8** is a schematic cross sectional view showing an example configuration of a wire harness manufacturing equipment in the second embodiment. While the screen **2** and the projector **5** are used as the display portion in the first embodiment, a touch panel display **12** is used in the second embodiment. The remaining configuration of the second embodiment is the same as the first embodiment.

The wire harness manufacturing equipment **1** in the second embodiment is provided with the touch panel display **12,** the housing **3** supporting the touch panel display **12,** the management unit **6** controlling the touch panel display **12,** and the remote controller **7** connected to the management unit **6.** The touch panel display **12** is an example of the display portion or the display-and-input portion.

The touch panel display **12** is configured to display an image and to allow image edit information, etc., to be input. In other words, the touch panel display **12** is configured so that information can be input by a hand, finger or pen, etc., through a touch panel arranged on the front surface of the display which displays images. In addition, the assembly jig **10** can be attached to a front surface **12a** of the touch panel display **12** in the same manner as the first embodiment. A transparent plate may be additionally arranged on the front surface **12a** of the touch panel display **12** so that the assembly jig **10** can be attached to the transparent plate. In this configuration, it is possible to attach the assembly jig **10** even when strength of the surface of the touch panel display **12** is low.

The remote controller **7** is the same as that in the first embodiment. Alternatively, the functions of the start button **71a,** the forward button **71b,** the reverse button **71c,** the end button **71d** and the numeric keypad **72** may be performed on the image displayed on the touch panel display **12.** In this case, it is possible to downsize the remote controller **7** by omitting the start button **71a,** the forward button **71b,** the reverse button **71c,** the end button **71d** and the numeric keypad **72.**

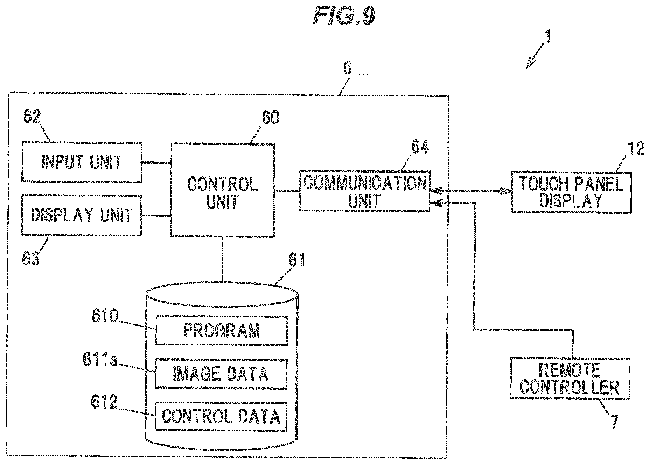

**FIG9** is a block diagram illustrating an example of a control system of the management unit **6** in the second embodiment. The management unit **6** is provided with the control unit **60,** the memory unit **61,** the input unit **62,** the display unit **63** and the communication unit **64** in the same manner as the first embodiment. The touch panel display **12** is connected to the communication unit **64.**

The memory unit **61** is constructed by using ROM, RAM or a hard disc, etc., and stores the program **610** for CPU, an image data **611a** constructed in the same manner as the projection image data **611,** and the control data **612,** etc.

The CPU of the control unit **60** operates as an editing means according to the program **610.** Based on edit information input through the touch panel display **12,** the editing means edits the image data stored in the memory unit **61.**

### Functions and effects of the second embodiment

In the second embodiment, the functions and effects (a) to (d) described above are obtained in the same manner as the first embodiment and also it is possible to edit the image data. In addition, the display portion can be smaller than that in the first embodiment.

Alternatively, provisional drawing data corresponding to the assembling process may be used instead of the image data corresponding the assembling process in the second embodiment. When the worker inputs provisional drawing edit information by a touch pen or electronic pen, etc., while placing a wire harness along the image displayed on the touch panel display **12,** the editing means of the management unit **6** edits the provisional drawing data stored in the memory unit based on the input edit information. The "provisional drawing data" here includes drawing information indicating the position for laying a wire harness and text information for instructing the harness assembling work.

### Third embodiment

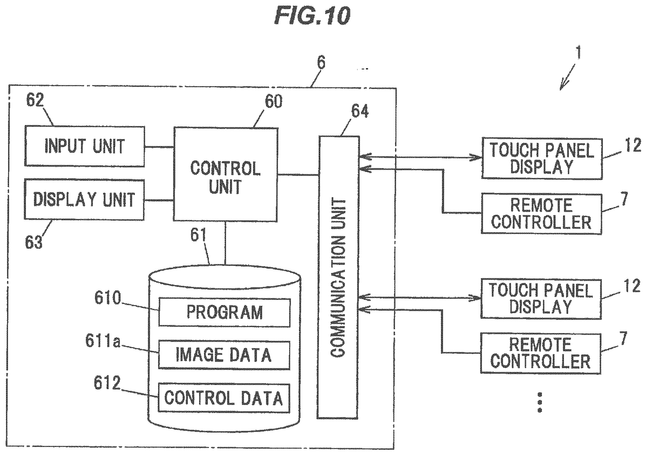

**FIG.10** is a schematic cross sectional view showing an example configuration of a wire harness manufacturing equipment in the third embodiment. While one touch panel display **12** and one remote controller **7** are connected to one management unit **6** in the second embodiment, plural touch panel displays **12** and plural remote controllers **7** are connected to one management unit **6** directly or via a network such as internet in the third embodiment.

The following functions and effects are obtained in the third embodiment.
(a) The same or different wire harness assemblies can be simultaneously manufactured by plural workers.
(b) Since start and end time of each worker for each step is managed by the management unit 6, it is possible to find which line is behind the schedule. Therefore, it is possible to increase the number of personnel at the line which is behind, thereby overcoming the delay.

Alternatively, the plural touch panel displays **12** may be arranged side by side so that the images for one wire harness assembly are separately displayed on the plural touch panel displays **12.** In this case, it is preferable that there be no gap between the touch panel displays **12.**

### Other modifications

The invention is not intended to be limited to the embodiments described above, and the various kinds of embodiments can be implemented without departing from scope of the invention as defined by the appended claims. Although the harness I laying step, the harness II laying step and the harness III laying step are sequentially shown by the respective images in each embodiment, the images of all harnesses may be displayed such that only the image of the currently processed harness is highlighted so as to stand out and display brightness of the others is dimmed.

In addition, some of the constituent elements of the embodiments of the invention may be omitted without departing from the scope of the invention as defined by the appended claims. For example, the image may be switched by the management unit 6 without using the remote controller 7. In addition, the projection image in the first embodiment may be directly projected on the screen without via the mirror.

In addition, various additions, omissions, changes and substitutions, etc., can be made to the assembling process of the embodiments without departing from the scope of the invention as defined by the appended claims.

The invention is applicable to railway wire harnesses, vehicle wire harnesses, medical wire harnesses and device wire harnesses, etc.

## Claims

1. A wire harness manufacturing equipment (1), comprising:
a plurality of display portions having a transparent front surface (2a; 12a) for displaying images, wherein the transparent front surface (2a; 12a) is configured such that assembly jigs (10) for wires to be laid can be attached thereto;
a memory unit (61) that stores image data corresponding to an assembling process of a wire harness, said image data including images of wires to be laid; and
a control means (60) that controls the plurality of display portions so that the images displayed based on the image data stored in the memory unit (61) are changed to display an image of a wire to be laid in a next laying step without displaying an image of a wire for which a laying step is completed to follow the progress of the assembling process; and
an acquiring means for acquiring progress information that indicates the progress status of the assembling process displayed on the plurality of display portions, wherein
said plurality of display portions are arranged in a row to be displayed, and
said control means (60) is adapted to control the plurality of display portions so that the divided images are separately displayed based on the image data stored in the memory unit and are changed to follow the progress of the assembling process.

2. The equipment according to claim 1, wherein said display portion is a touch panel display (12) configured to allow image edit information to be input, and
the control means (60) is adapted to edit, based on the image edit information input through the touch display panel (12), the image data stored in the memory unit (61).

3. The equipment according to claim 1 or 2, wherein said image data includes a tube image showing a position of a slit tube for bundling wires.

4. The equipment according to claim 1 or 2, wherein said image data includes a tape image showing a position of a tape for bundling wires.

## Patentansprüche

1. Kabelbaumherstellungsgerät (1), umfassend:
eine Mehrzahl von Anzeigebereichen mit einer transparenten Frontoberfläche (2a; 12a) zum Anzeigen von Bildern, wobei die transparente Frontoberfläche (2a; 12a) derart konfiguriert ist, dass Zusammenbauschablonen (10) für zu verlegende Drähte daran angebracht werden können;
eine Speichereinheit (61), die Bilddaten entsprechend einem Zusammenbauprozess eines Kabelbaums speichert, wobei die Bilddaten Bilder von zu verlegenden Drähten enthalten; und
eine Steuereinrichtung (60), die die Mehrzahl von Anzeigebereichen derart steuert, dass die Bilder, die basierend auf den Bilddaten angezeigt werden, die in der Speichereinheit (61) gespeichert sind, geändert werden, um ein Bild eines Drahts anzuzeigen, der in einem nächsten Verlegeschritt zu verlegen ist, ohne ein Bild eines Drahts anzuzeigen, für den ein Verlegeschritt komplettiert ist, um dem Fortschritt des Zusammenbauprozesses zu folgen; und
eine Erfassungseinrichtung zum Erfassen einer Fortschrittsinformation, die den Fortschrittsstatus des Zusammenbauprozesses angibt, der auf der Mehrzahl von Anzeigebereichen angezeigt wird, wobei
die Mehrzahl von Anzeigebereichen in einer Reihe zur Anzeige angeordnet sind, und
die Steuereinrichtung (60) dazu ausgelegt ist, die Mehrzahl von Anzeigebereichen derart zu steuern, dass die geteilten Bilder basierend auf den Bilddaten, die in der Speichereinheit gespeichert sind, separat angezeigt werden und verändert werden, um dem Fortschritt des Zusammenbauprozesses zu folgen.

2. Gerät nach Anspruch 1, wobei der Anzeigebereich eine berührungsempfindliche Bildschirmanzeige (12) ist, die dazu konfiguriert ist, die Eingabe einer Bildeditierinformation zu ermöglichen, und
die Steuereinrichtung (60) dazu ausgelegt ist, basierend auf der Bildeditierinformation, die durch den berührungsempfindlichen Anzeigebildschirm (12) eingegeben wird, die Bilddaten zu editieren, die in der Speichereinheit (61) gespeichert sind.

3. Gerät nach Anspruch 1 oder 2, wobei die Bilddaten ein Rohrbild enthalten, das eine Position eines Schlitzrohrs zum Bündeln von Drähten zeigt.

4. Gerät nach Anspruch 1 oder 2, wobei die Bilddaten ein Bandbild enthalten, das eine Position eines Bands zum Bündeln von Drähten zeigt.

## Revendications

1. Equipement de fabrication d'un faisceau de câbles (1), comprenant:
une pluralité de parties d'affichage ayant une surface frontale transparente (2a; 12a) pour l'affichage d'images, la surface frontale transparente (2a; 12a) étant configurée de telle sorte que des gabarits de montage (10) pour les fils à poser peuvent y être fixés;
une unité de mémoire (61) qui stocke des données d'image correspondant à un processus d'assemblage d'un faisceau de câbles, lesdites données d'image comprenant des images de câbles à poser; et
un moyen de commande (60) qui commande la pluralité de parties d'affichage de sorte que les images affichées sur la base des données d'image stockées dans l'unité de mémoire (61) sont modifiées pour afficher une image d'un fil à poser dans une étape de pose suivante sans afficher une image d'un fil pour lequel une étape de pose est terminée pour suivre le déroulement du processus d'assemblage; et
un moyen d'acquisition pour acquérir des informations sur l'avancement qui indiquent l'état d'avancement du processus d'assemblage affiché sur la pluralité de parties d'affichage, dans lequel
ladite pluralité de parties d'affichage est disposée en une rangée pour être affichée, et
ledit moyen de commande (60) est conçu pour commander la pluralité de parties d'affichage de sorte que les images divisées sont affichées séparément sur la base des données d'image stockées dans l'unité de mémoire et sont modifiées pour suivre la progression du processus d'assemblage.

2. Equipement selon la revendication 1, dans lequel ladite partie d'affichage est un écran tactile (12) configuré pour permettre l'entrée d'informations d'édition d'image, et
le moyen de commande (60) est conçu pour éditer, sur la base des informations d'édition d'image saisies par l'intermédiaire de l'écran tactile (12), les données d'image stockées dans l'unité de mémoire (61).

3. Equipement selon les revendications 1 ou 2, dans lequel lesdites données d'image comprennent une image de tube montrant une position d'un tube fendu pour mettre des fils en faisceau.

4. Equipement selon les revendications 1 ou 2, dans lequel lesdites données d'image comprennent une image de bande montrant une position d'une bande pour le regroupement de fils.
